# EUROPÄISCHE PATENTANMELDUNG

(11) **EP 1 120 980 A2**
(43) Veröffentlichungstag der Anmeldung: **01.08.2001**
(21) Anmeldenummer: 00125612.2
(22) Anmeldetag: 23.11.2000
(51) Int. Cl.: H04Q 3/545

(54) **Verfahren zur Konfiguration einer Vermittlungsanlage**

(30) Priorität: 19.01.2000 DE 10002029
(71) Anmelder: Tenovis GmbH & Co. KG, 60326 Frankfurt (DE)
(72) Erfinder: Menk, Klaus-Dieter, 65597 Huenfelden-Ohren (DE)
(74) Vertreter: Beck, Josef

(57) **Zusammenfassung**

Die Erfindung betrifft ein Verfahren zur automatischen Umkonfigurierung einer Vermittlungsanlage (1), bei welchem ein Aktualisierungsprogramm (4) als Bindeglied zwischen einer (kommerziellen) Datenbank (7) und der Vermittlungsanlage (1) angeordnet ist. Vom Benutzer durchgeführte Änderungen (8) in der Datenbank (7) werden an das Aktualisierungsprogramm (4) weitergeleitet (6), vom Aktualisierungsprogramm in Befehle (2) des entsprechenden Konfigurationsprotokolls umgesetzt und an die Vermittlungsanlage (1) gesendet. Dort erfolgt eine entsprechende Änderung der Konfiguration. Der Erfolg oder Misserfolg der Konfigurationsänderung in der Vermittlungsanlage (1) wird über ein Bestätigungssignal (3) an das Aktualisierungsprogramm (4) und von diesem über eine Meldung (5) an die Datenbank (7) weitergeleitet, welche ihrerseits einen Hinweis (9) für den Benutzer erzeugen kann.

## Beschreibung

### Technisches Gebiet

Die Erfindung betrifft ein Verfahren zur Konfiguration einer Telekommunikations-Vermittlungsanlage über ein Konfigurationsprotokoll.

### Stand der Technik

Telekommunikations-Vermittlungsanlagen (im folgenden kurz als Vermittlungsanlagen bezeichnet) dienen dazu, Teilnehmer eines Telekommunikationsnetzes miteinander zu verbinden. Derartige Anlagen werden insbesondere als sogenannte Nebenstellen für Telefonanschlüsse bei Endnutzern eingesetzt, welche über eine begrenzte Anzahl von Amtsleitungen mit dem Fernsprechnetz verbunden sind und welche andererseits eine größere Anzahl von Nutzern und Endgeräten betreiben möchten. Derartige Vermittlungsanlagen werden auf die beim Endnutzer, zum Beispiel einem Unternehmen oder einer Behörde, vorliegenden speziellen Bedürfnisse individuell abgestimmt, indem sie über Software geeignet konfiguriert werden. Die dabei bestimmten Konfigurationsparameter werden im Speicher in der Vermittlungsanlage abgelegt. Über die Konfiguration wird beispielsweise festgelegt, unter welcher Durchwahl ein bestimmter Mitarbeiter oder ein bestimmtes Gerät im Unternehmen von extern erreichbar ist. Im Rahmen der vorliegenden Erfindung sollen unter Vermittlungsanlagen ferner Systeme verstanden werden, die der Koordination und dem Austausch elektronischer Nachrichten (E-Mails) dienen.

Der Konfiguration der Vermittlungsanlage dient ein spezielles Konfigurationsprotokoll, das heißt in der Regel eine (Maschinen-) Sprache, mit welcher die gewünschten Konfigurationsänderungen im Speicher der Vermittlungsanlage vorgenommen werden können. Bei derartigen Konfigurationsprotokollen handelt es sich somit um auf die Vermittlungsanlage zugeschnittene Sprachen, welche in der Regel einen speziell ausgebildeten Programmierer zur Änderung der Konfiguration der Anlage erforderlich machen. Aus diesem Grunde ist es sehr umständlich und teuer, Veränderungen im Bereich des Endanwenders der Vermittlungsanlage, die für die Arbeit der Vermittlungsanlage von Bedeutung sind, in eine angemessene Umkonfigurierung der Vermittlungsanlage umzusetzen. Sehr häufig unterbleiben daher solche Änderungen ganz oder werden nur mit einer erheblichen Verzögerung ausgeführt. So kann es zum Beispiel sein, dass bei Umzug eines Mitarbeiters innerhalb eines Betriebes dieser Mitarbeiter nicht mehr unter seiner bisherigen Durchwahl erreichbar ist, da diese Durchwahl mit dem am früheren Arbeitsplatz befindlichen Telefonapparat fest verbunden bleibt. Weiterhin kann es, wenn Änderung der Konfiguration der Vermittlungsanlage vorgenommen werden, dabei zu Eingabefehlern kommen, welche zu einer Diskrepanz zwischen der Konfiguration und der Realität führen können. Die ursprünglich eingestellte Konfiguration einer Vermittlungsanlage veraltet daher in der Regel sehr schnell und entspricht dann nicht mehr den tatsächlichen Verhältnissen am Einsatzort.

Andererseits sind beim heute üblichen computerisierten Stand der Datenverarbeitung in der Regel immer in elektronischer Form gespeicherte Daten über die im Bereich des Endanwenders stattfindenden Veränderungen vorhanden. Derartige Veränderungen wie zum Beispiel der Einsatzort von Mitarbeitern werden in der Regel in zentralen Datenbanken gespeichert und ständig auf einem aktuellen Stand gehalten.

### Darstellung der Erfindung, Aufgabe, Lösung, Vorteile

Aufgabe der vorliegenden Erfindung war es, die Aktualisierung der Konfiguration einer Vermittlungsanlage beim Endanwender zu vereinfachen und hinsichtlich der Zuverlässigkeit der Daten zu verbessern.

Diese Aufgabe wird durch ein Verfahren nach Anspruch 1 gelöst.

Das Verfahren zur Konfiguration einer Telekommunikations-Vermittlungsanlage über ein Konfigurationsprotokoll ist demnach dadurch gekennzeichnet, dass zunächst eine elektronische Datenbank mit Informationen über die Anwendungsumgebung der Vermittlungsanlage angelegt wird. Wie oben bereits erläutert wurde, sind derartige Datenbanken bei fast allen Endanwendern einer Vermittlungsanlage ohnehin vorhanden. Zur Anwendungsumgebung der Vermittlungsanlage zählen insbesondere an der Telekommunikation teilnehmende Personen als auch mit der Vermittlungsanlage gekoppelte Endgeräte (Computer, Faxe, Anrufbeantworter etc.). Das Verfahren ist weiterhin dadurch gekennzeichnet, dass mit einem Aktualisierungsprogramm, welches auf einer elektronischen Datenverarbeitungsanlage läuft, überwacht wird, ob Änderungen in der Datenbank vorgenommen wurden, die für die Konfiguration der Vermittlungsanlage relevant sind oder sein könnten. Werden solche Änderungen festgestellt, dann werden von dem Aktualisierungsprogramm Befehle gemäß dem Konfigurationsprotokoll an die Vermittlungsanlage abgegeben, mit welchen die Änderungen der Datenbank in entsprechende Änderungen der Konfiguration der Vermittlungsanlage übernommen werden.

Bei dem erfindungsgemäßen Verfahren sorgt demnach ein Computerprogramm dafür, dass die Konfiguration der Vermittlungsanlage ständig auf dem neuesten Stand, das heißt dem Stand der entsprechenden Datenbank gehalten wird. Da Datenbanken ohnehin an zentraler Stelle eines Unternehmens vorhanden sind und dort mit großer Sorgfalt auf einem aktuellen Stand gehalten und gepflegt werden, ist auf diese Weise gewährleistet, dass auch die Vermittlungsanlage ständig gemäß dem aktuellen Zustand der Anwendungsumgebung des Endanwenders konfiguriert ist. Da die zentrale Datenbank ferner mit geeigneten Verfahren regelmäßig gegen Datenverlust gesichert wird, ist auf diese Weise auch die Konfiguration der Vermittlungsanlage (indirekt) gesichert. Das Aktualisierungsprogramm sorgt ferner dafür, dass die Erzeugung von Befehlen für die Vermittlungsanlage automatisch in der hierfür geltenden Sprache des Konfigurationsprotokolls erfolgt. Der Endanwender muss sich somit nicht selbst in dieser Konfigurationssprache auskennen und diese beherrschen. Vielmehr reicht es, dass er die Datenbestände der Datenbank pflegt. Hierbei kommt ihm zugute, dass Bedienungsprogramme für Datenbanken in der Regel sehr viel benutzerfreundlicher gehalten sind als Konfigurationsprotokolle für Vermittlungsanlagen, die in der Regel technische Spezialkenntnisse voraussetzen. Das Aktualisierungsprogramm übernimmt somit quasi die Funktion eines Compilers, welcher Instruktionen (Datenänderungen) aus einer Sprache (der Datenbank) in eine andere Sprache (dem Konfigurationsprotokoll) übersetzt. Um die Einzelheiten der Übersetzung muss sich der Endanwender nicht mehr kümmern. Die Kommunikation des Aktualisierungsprogramm mit der Datenbank kann über standardisierte Schnittstellen erfolgen, welche von den kommerziellen Datenbanken zur Verfügung gestellt werden.

Aktualisierungsprogramme können vom Hersteller der Vermittlungsanlage, welcher das Konfigurationsprotokoll kennt beziehungsweise selbst definiert, geschrieben und zusammen mit der Vermittlungsanlage an den Kunden verkauft werden. Die Aktualisierungsprogramme können dabei für die Zusammenarbeit mit verschiedenen gängigen Datenbanken beziehungsweise Schnittstellenprotokollen von Datenbanken abgefasst werden.

Denkbar ist es auch, dass ein Standard-Konfigurationsprotokoll definiert würde. Das Aktualisierungsprogramm könnte dann zweigeteilt werden. Die Hersteller von Vermittlungsanlagen müssten ein erstes Programm zur Übersetzung zwischen dem Standard-Konfigurationsprotokoll und ihrem proprietären Konfigurationsprotokoll zur Verfügung stellen. Die Herstellern von Datenbanken müssten entsprechend ein zweites Programm zur Übersetzung zwischen der proprietären Datenbanksprache und dem Standard-Konfigurationsprotokoll anbieten. Die Kopplung beider Programme würde dann die gewünschte Verbindung zwischen proprietärer Datenbank und proprietärer Vermittlungsanlage herstellen. Der Vorteil wäre, dass mit *n* verschiedenen Übersetzungsprogrammen von Standard-Konfigurationsprotokoll nach proprietärem Konfigurationsprotokoll und mit *m* verschiedenen Übersetzungsprogrammen zwischen der Datenbanksprache und dem Standard-Konfigurationsprotokoll alle *n×m* Kombinationen zwischen Datenbanken und Vermittlungsanlagen gekoppelt werden könnten.

Bei einer Weiterbildung des Verfahrens gemäß Anspruch 2 erhält das Aktualisierungsprogramm als Antwort auf einen Änderungsbefehl der oben beschriebenen Art ein Bestätigungssignal und/oder ein Fehlersignal von der Vermittlungsanlage zurück. Ein Bestätigungssignal zeigt dabei die korrekte Übernahme der auszuführenden Änderungen in die Konfiguration der Vermittlungsanlage an. Entsprechend zeigt ein Fehlersignal an, dass eine solche Änderung nicht ordnungsgemäß übernommen worden ist. Beide Signale eignen sich demnach dazu, das Auftreten eines Fehlers bei der Neukonfiguration der Vermittlungsanlage zu erkennen. Ein solcher Fehler wird dann von dem Aktualisierungsprogramm an das Datenbankprogramm gemeldet, welches den Benutzer auf die nicht übernommene Änderung in der Vermittlungsanlage aufmerksam machen kann. Der Benutzer kann dann geeignete Schritte einleiten, zum Beispiel die entsprechende Änderung der Datenbank erneut vornehmen oder gegebenenfalls technische Hilfe bezüglich der Vermittlungsanlage in Anspruch nehmen.

Gemäß Anspruch 3 werden die elektronische Datenbank und/oder das Aktualisierungsprogramm auf einem Computer ausgeführt. Personalcomputer, Workstations oder Großrechenanlagen sind weit verbreitet und gängiges Arbeitsmittel, für deren Bedienung in jedem Betrieb entsprechendes Personal verfügbar ist. Weiterhin stehen hierfür zahlreiche Werkzeuge wie Datenbankprogramme und Programmiersprachen zur Verfügung, mit denen die gewünschten Aufgaben durchgeführt werden können.

### Bester Weg zur Ausführung der Erfindung

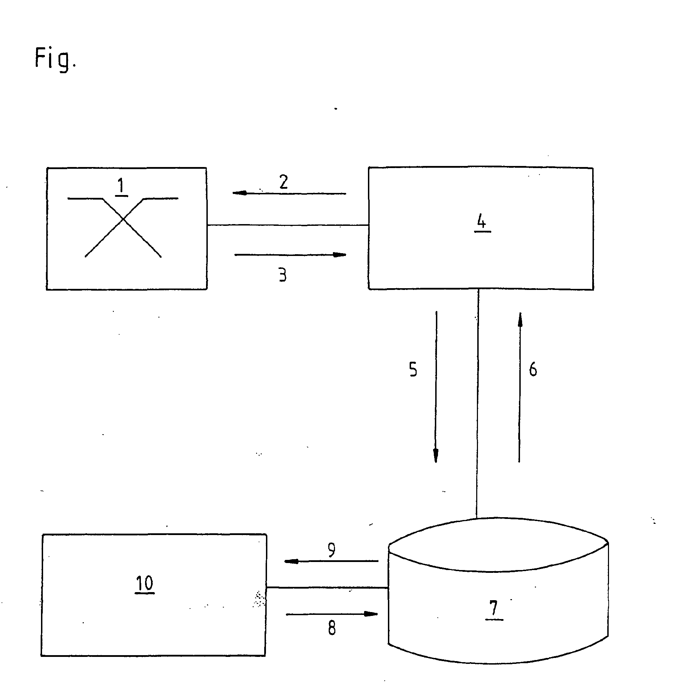

Im folgenden wird die Erfindung mit Hilfe der Figur erläutert.

Die Figur zeigt schematisch die Verbindungen und den Datenfluss bei der Ausführung des erfindungsgemäßen Verfahrens. In einer Vermittlungsanlage 1 wird durch die in der Software beziehungsweise im Speicher dieser Vermittlungsanlage enthaltenen Informationen die für die Verhältnisse beim Endanwender zutreffende Konfiguration festgelegt. Die Neukonfiguration bzw. Änderung einer bestehenden Konfiguration bei derartigen Vermittlungsanlagen 1 ist jedoch insbesondere bei Netzen problematisch. Sie erfolgt über entsprechende Protokolle, für deren Erstellung spezielle Werkzeuge erforderlich sind. Die Änderung der Konfiguration der Vermittlungsanlage 1 begegnet daher erheblichen Schwierigkeiten, was häufig dazu führt, dass im Bereich des Endanwenders stattfindende Änderungen (zum Beispiel der Umzug eines Mitarbeiters) nicht oder allenfalls sehr verspätet in der Konfiguration der Vermittlungsanlage nachvollzogen werden. Dabei besteht das Problem, dass eine Inkonsistenz der Daten auftritt, das heißt, dass aufgrund unterlassener Anpassung und von Programmierfehlern die Konfiguration der Vermittlungsanlage 1 vom tatsächlichen Zustand abweicht.

Andererseits sind in der Regel bei allen Endanwendern Datenbanken 7 auf einem Computersystem vorhanden, in welchem die für eine richtige Konfiguration der Vermittlungsanlage 1 relevanten Informationen enthalten sind. Derartige Datenbanken speichern zum Beispiel die Arbeitsorte der einzelnen Mitarbeiter eines Unternehmens. Nötigenfalls kann eine solche Datenbank 7 jedoch auch speziell für die Vermittlungsanlage 1 angelegt werden. Der Vorteil einer solchen Datenbank besteht darin, dass hierfür kommerziell erhältliche und in der Regel sehr bedienerfreundlich ausgestaltete Programme eingesetzt werden können. Diese arbeiten auch mit anderen Applikationen (Programmen wie zum Beispiel Buchhaltung, Textverarbeitung, Data Warehouse) zusammen und besitzen graphische Oberflächen (GUI) und Hilfsprogramme zur Eingabe und Veränderung der gespeicherten Daten.

Erfindungsgemäß wird nun durch ein Aktualisierungsprogramm 4 eine Verbindung zwischen der Datenbank 7 und der Vermittlungsanlage 1 hergestellt. Das Aktualisierungsprogramm 4 läuft für den Endanwender unsichtbar im Hintergrund hinter der Datenbank 7. Die Verbindung verläuft in der folgenden Weise:

Werden Daten in der Datenbank 7 durch eine Eingabe 8 geändert, so wird hierdurch ein Triggersignal 6 von der Datenbank beziehungsweise einer in der Datenbank enthaltenen Tabelle an das Aktualisierungsprogramm 4 erzeugt. Das heißt, es wird über eine geeignete Schnittstelle der Datenbank das Aktualisierungsprogramm 4 aufgerufen. Dabei wird dem Aktualisierungsprogramm zugleich die geänderte Information in der Datenbank mitgeteilt. Das Aktualisierungsprogramm 4 erzeugt daraufhin die geeigneten Befehle 2, mit denen die Konfiguration der Vermittlungsanlage 1 entsprechend geändert werden kann, und übermittelt diese Befehle 2 an die Vermittlungsanlage 1. Bei erfolgreicher Datenänderung in der Vermittlungsanlage 1 wird das Aktualisierungsprogramm 4 hierüber über ein Bestätigungssignal 3 informiert. Dieses Bestätigungssignal (beziehungsweise im Falle eines Fehlers ein Fehlersignal) kann als Signal 5 vom Aktualisierungsprogramm 4 an die Datenbank 7 weitergegeben werden. Die Datenbank 7 kann dann ihrerseits über eine Ausgabe 9 den Benutzer oder eine andere Applikation darüber informieren, dass die Vermittlungsanlage erfolgreich umkonfiguriert wurde beziehungsweise dass eine solche Umkonfigurierung fehlgeschlagen ist. Im Falle eines Fehlers kann darüber hinaus sogar die Datenänderung 8 in der Datenbank abgebrochen beziehungsweise rückgängig gemacht werden, so dass ständig eine Konsistenz zwischen der Datenbank 7 und der Vermittlungsanlage 1 sichergestellt ist.

Neben der einfacheren und vom normalen Endanwender durchführbaren Konfigurationsänderung einer Vermittlungsanlage 1 hat das erfindungsgemäße Verfahren den Vorteil, dass auch eine größere Datensicherheit beziehungsweise Datenkonsistenz gewährleistet ist. Die Datenbank 7 wird nämlich in der Regel mit großer Sorgfalt aktualisiert und gepflegt und dabei auch regelmäßigen Sicherungskopien (Backups) unterzogen. Bei der Übertragung der Daten an die Vermittlungsanlage 1 kann es aufgrund der Automatisierung nicht zu Eingabefehlern kommen. Gegebenenfalls kann die in der Figur gezeigte Datenbank 7 eine speziell für die Vermittlungsanlage 1 hergestellte Datenbank sein, welche dann ihrerseits mit einer größeren Datenbank des Unternehmens, zum Beispiel der Personaldatenbank, zusammenhängt.

Die Vermittlungsanlage 1 kann auch eine Anlage zur Verwaltung und Weiterleitung elektronischer Post (E-Mail) sein. So wurde das erfindungsgemäße Verfahren z.B. erfolgreich in Zusammenhang mit einem Exchange® E-Mail Server der Firma Microsoft eingesetzt.

## Patentansprüche

1. Verfahren zur Konfiguration einer Telekommunikations-Vermittlungsanlage (1) über ein Konfigurationsprotokoll,
**dadurch gekennzeichnet,**
dass eine elektronische Datenbank (7) mit Informationen über die Anwendungsumgebung der Vermittlungsanlage angelegt wird, dass mit einem Aktualisierungsprogramm (4) überwacht wird, ob für die Konfiguration der Vermittlungsanlage relevante Änderungen in der Datenbank (7) vorgenommen wurden
und dass im Falle solcher relevanter Änderungen von dem Aktualisierungsprogramm (4) Befehle (2) entsprechend dem Konfigurationsprotokoll an die Vermittlungsanlage (1) abgegeben werden, mit welchen die Änderungen der Datenbank (7) in Konfigurationsänderungen der Vermittlungsanlage (1) übernommen werden.

2. Verfahren nach Anspruch 1,
**dadurch gekennzeichnet**, dass
die Vermittlungsanlage (1) als Antwort auf einen Änderungsbefehl (2) ein Bestätigungssignal (3) und/oder ein Fehlersignal an das Aktualisierungsprogramm (4) sendet,
und dass das Aktualisierungsprogramm im Falle einer von der Vermittlungsanlage (1) nicht übernommenen Änderung eine Rückmeldung (5) an die Datenbank (7) sendet.

3. Verfahren nach Anspruch 1 oder,
**dadurch gekennzeichnet,** dass
die Datenbank (7) und/oder das Aktualisierungsprogramm (4) auf einem Computer ausgeführt werden.
